(19) Europäisches Patentamt
European Patent Office
Office européen des brevets

(11) **EP 4 787 303 A1**

(12) **EUROPÄISCHE PATENTANMELDUNG**

(43) Veröffentlichungstag:
**05.08.2026 Patentblatt 2026/32**

(21) Anmeldenummer: **26154879.6**

(22) Anmeldetag: **29.01.2026**

(51) Internationale Patentklassifikation (IPC):
**G06T 7/11** (2017.01)   **G06N 3/047** (2023.01)
**G06V 20/56** (2022.01)

(52) Gemeinsame Patentklassifikation (CPC):
**G06T 7/11; G06N 3/047; G06V 20/56;**
G06T 2207/20076; G06T 2207/20084;
G06T 2207/30252

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **03.02.2025 DE 102025103890**

(71) Anmelder: **Siemens Mobility GmbH**
**80997 München (DE)**

(72) Erfinder:
• **Schmid, Reiner**
**85748 Garching (DE)**
• **Rothbauer, Stefan**
**80997 München (DE)**
• **Storck, Stephan**
**80997 München (DE)**

(74) Vertreter: **Siemens Patent Attorneys**
**Postfach 22 16 34**
**80506 München (DE)**

(54) **BEWERTEN EINER ZUVERLÄSSIGKEIT EINES SEGMENTIERUNGSBILDES**

(57) In der Erfindung geht es um die Bewertung einer Zuverlässigkeit eines Segmentierungsbildes (M), welches als Ergebnis einer Segmentierung eines Eingangsbildes (E) zumindest eine Objektkategorie (c) bereitstellt. Dabei wird für alle Pixel in dem Segmentierungsbild (M), welche gemäß der Segmentierung einer gemeinsamen Objektkategorie (c) zugeordnet sind, jeweils eine Relevanzkarte (R) ermittelt, in welcher für jeden Pixel des Eingangsbildes (E) ein Relevanzwert für die Segmentierung angegeben ist. Dabei wird für alle Pixel eine Varianz der Relevanzwerte über den Satz der Relevanzkarten (R) bestimmt. Zum Bewerten der Zuverlässigkeit wird dann in Abhängigkeit von einer Varianz der Relevanzwerte der Pixel des ermittelten Satzes an Relevanzkarten (R) eine Konfidenzmaske(K) ermittelt. Die Konfidenzmaske (K) wird ermittelt, indem für einen vorgegebenen Randbereich (R) um alle Pixel der gemeinsamen Objektkategorie (c) herum gemäß einem vorgegebenen Vergleichskriterium zumindest eine Konfidenzklasse ermittelt wird, welche ein Maß dafür angibt, wie zuverlässig in dem Randbereich (A) ein Wechsel der mittels Segmentierung jeweils ermittelten Objektkategorie (c) erkannt wurde.

FIG 8

EP 4 787 303 A1

**Beschreibung**

Für die Realisierung der Steuerung autonomer Fahrzeuge, beispielsweise von Zügen, dienen Methoden basierend auf Künstlicher Intelligenz (KI) als wesentliche Grundlage, um mit der nahezu unbegrenzten Variation der Situationen umgehen zu können, die bei ihrem Einsatz auftreten können. Als Teil dieser Realisierungen kommen KI-basierte Segmentierungsverfahren zum Einsatz, bei welchen anhand von Kamerabildern ein Verlauf von für die Fahrt relevanten Umgebungselementen, beispielsweise der Schienenwege, in den Bildern bestimmen können. Diese Information ist eine wichtige Grundlage für den Abgleich mit Karteninformationen zur Ortsbestimmung oder bei der Beurteilung, ob in Gleisnähe ein Hindernis oder eine Gefährdung vorhanden ist.

Segmentierungsverfahren basierend auf Methoden der künstlichen Intelligenz stellen derzeit die performanteste Lösung für Segmentierung dar. Die Bewertung der Güte eines Segmentierungsverfahrens, beziehungsweise dass dieses die Segmentierung aufgrund der richtigen Bildeigenschaften korrekt vorgenommen hat, also zum gewünschten Ergebnis kommt, das die Realität korrekt abbildet, ist derzeit nicht automatisiert zuverlässig messbar. Daher wird die Bewertung, ob ein Segmentierungsverfahren ausreichend gut funktioniert, zumindest in Teilen manuell vorgenommen. Hierbei wird zum Beispiel automatisch überprüft, ob einzelne ausgewählte Beispielbilder mit bekannter Ground Truth (reale Daten zum Trainieren und Testen von KI-Modellausgaben) ausreichend übereinstimmen. Anschließend analysiert ein menschlicher Betrachter, ob die Segmentierung anhand der richtigen Bildeigenschaften vorgenommen wurde (Saliency Map Analyse).

Darüber hinaus werden zur Entwicklungszeit Relevanzkarten, wie beispielsweise Saliency Maps verwendet, in denen Bildbereiche hervorgehoben werden, die für das Ergebnis die höchste Relevanz hatten. Die hervorgehobenen Bildbereiche können helfen zu erkennen, ob in einem konkreten Fall die Erkennung der Segmentierung basierend auf den gewünschten Bildfeatures erfolgte. Hiermit können zwar relevante Hinweise für eine eventuelle Anpassung des Verfahrens (z. B. weiteres Training mit einer gewissen Klasse an Inputdaten) gewonnen werden. Diese lokale Bewertung ist leider lediglich manuell durchführbar und daher nur stichprobenartig verwendbar. Zudem muss sie bei jeder neuen Version des Segmentierungsverfahrens (retraining) wiederholt werden.

Deshalb ist dieser manuelle Ansatz zur Bewertung nicht zur Laufzeit anwendbar, zum Beispiel bei der Segmentierung des Gleisbetts im Zugverkehr für autonom fahrende Züge. Das Verfahren ist darüber hinaus mit hohem Aufwand verbunden und erzeugt gegebenenfalls nicht wiederholbare, subjektive Ergebnisse, die durch die Erfahrung des menschlichen Betrachters zustande kommen.

Für eine globale Bewertung des Segmentierungsverfahrens werden heute verschiedene Metriken verwendet, zum Beispiel IoU (Intersection over Union). Bei IoU handelt es sich um eine bekannte Metrik, die die Überlappung zwischen einem vorhergesagten Begrenzungsrahmen und einem Ground-Truth-Begrenzungsrahmen berechnet. Diese geben allerdings nur einen globalen Anhaltspunkt, keine lokale Aussage. Die globale Aussage erfolgt auf einem repräsentativen Datensatz, bei dem das gewünschte Ergebnis bekannt ist (Ground Truth). Dies ist somit eine Aussage, die nicht zur Laufzeit möglich ist. Für sicherheitsrelevante Anwendungen ist in der Regel für die Anwendung zur Laufzeit eine lokale Bewertung, also die Bewertung des Ergebnisses des aktuellen Eingabedatensatzes aussagekräftiger beziehungsweise wird zwingend benötigt. Deshalb können Segmentierungsverfahren bisher nicht in sicherheitsrelevanten Anwendungen eingesetzt werden.

Um zur Laufzeit, also während der Fahrt oder Verwendung der Segmentierung anwendbar zu sein, wird ein automatisierbares Verfahren benötigt, das die Güte oder Zuverlässigkeit eines Segmentierungsverfahrens zur Laufzeit, ohne vorhandene Ground Truth bewertet, und mögliche Probleme eines konkreten Segmentierungsergebnisses eines Inputdatensatzes (Bild) aufzeigen kann oder das erhaltene Ergebnis der Segmentierung bestätigt.

Es ist die Aufgabe der vorliegenden Erfindung die Zuverlässigkeit einer Segmentierung eines Eingangsbildes zur Laufzeit zu ermöglichen.

Diese Aufgabe wird durch den jeweiligen Gegenstand der unabhängigen Ansprüche gelöst. Vorteilhafte Ausführungsformen und bevorzugte Weiterbildungen sind Gegenstand der abhängigen Ansprüche, der Beschreibung sowie der Figuren.

Gemäß einem Aspekt betrifft die Erfindung ein computerimplementiertes Verfahren zum Bewerten einer Zuverlässigkeit oder Vertrauenswürdigkeit oder Güte eines Segmentierungsbildes. Das Segmentierungsbild wird als Ergebnis einer Segmentierung eines Eingangsbildes bereitgestellt und stellt zumindest eine Objektkategorie in dem Eingangsbild dar oder bereit.

Dabei wird für alle Pixel in dem Segmentierungsbild, welche gemäß der Segmentierung einer gemeinsamen, also derselben Objektkategorie zugeordnet sind, jeweils eine Relevanzkarte ermittelt, in welcher für jeden Pixel des Eingangsbildes ein Relevanzwert für die Segmentierung angegeben ist. Für alle Pixel wird dann eine Varianz der Relevanzwerte über den Satz der Relevanzkarten bestimmt wird. Zum Bewerten der Zuverlässigkeit wird in Abhängigkeit von der Varianz der Relevanzwerte der Pixel des ermittelten Satzes an Relevanzkarten eine Konfidenzmaske ermittelt. Die Konfidenzmaske wird ermittelt, indem für einen vorgegebenen Randbereich um alle Pixel der gemeinsamen Objektkategorie herum gemäß einem vorgegebenen Vergleichskriterium zumindest eine Konfidenzklasse ermittelt wird, welche ein Maß dafür angibt, wie zuverlässig in dem Randbereich ein Wechsel der mittels Segmentierung jeweils ermittelten Objektkategorie erkannt wurde.

Es wird also die Varianz der Relevanzkarten genutzt, um einen Einblick darin zu gewinnen, ob Bereiche des Bildes für den gesamten segmentierten Bereich derselben Objektkategorie gleichermaßen wichtig waren, oder stark variierend in die Relevanzkarte der Segmentierung eingehen. In experimentellen Untersuchungen der Varianz über die Relevanzkarten zu den Pixeln der gemeinsamen Objektkategorie hat sich nämlich folgendes gezeigt: Pixel, die als Teil der Segmentierung einer gemeinsamen Kategorie identifiziert worden sind, haben jeweils eine Relevanz in Bezug auf die anderen Pixel derselben Kategorie, die nur in einem recht engen Bereich variiert. Auf das konkrete Beispiel einer Gleisbetterkennung für einen Zug bedeutet dies, dass in gut erkannten Bereichen des Gleisbetts innerhalb der Schienen die Varianz niedrig ist. Werden im Gegensatz dazu Pixel in unmittelbarer Nachbarschaft der Pixel der gemeinsamen Objektkategorie betrachtet, so weisen diese eine starke Variation der Relevanz gegenüber den Pixeln des Bildes auf, die zu dem Objekt der gemeinsamen Objektkategorie gehören. Diese Variation ist umso ausgeprägter, je eindeutiger und schärfer die Trennung von dem eigentlichen Objekt der gemeinsamen Objektkategorie ist, also, wenn mittels Segmentierung unterschiedliche Objekte erkannt wurden. Im Anwendungsbeispiel "Zug" ist beispielsweise am Grenzbereich, also dem Übergang weg vom Gleisbett, die Varianz dagegen hoch, wenn diese Merkmale bei der Segmentierung gut erkannt werden konnten. Dieser Grenzbereich oder Übergang ist durch den Randbereich vorgegeben. Kann dieser Bereich nicht gut aufgelöst werden, beispielsweise, wenn die Schienen weit von einer Kamera entfernt sind oder Störungen die Erkennung beeinträchtigen, sinkt die Varianz deutlich. Die Betrachtung dieser Varianz kann nun als Konfidenzmaß, also zum Bewerten der Zuverlässigkeit des Segmentierungsbildes, in Laufzeit verwendet werden.

Unter Zuhilfenahme der Varianz ist es somit möglich, das Segmentierungsbild, das auch als Segmentierungsmaske bezeichnet werden kann, in Bereiche verschiedener Konfidenz zu teilen. Es können also eine oder mehrere Konfidenzklassen in der Konfidenzmaske vorgesehen sein. Damit können zusätzliche Informationen über die Eindeutigkeit und Verlässlichkeit der Segmentierung erhalten werden, die beispielsweise für die weitere Verarbeitung genutzt werden können.

Hierdurch ergibt sich der Vorteil, dass die Zuverlässigkeit einer Segmentierung eines Eingangsbildes zur Laufzeit möglich ist. Das Segmentierungsbild kann somit in Echtzeit analysiert und bewertet werden, um so festzustellen, ob das Segmentierungsergebnis für die weitere Verwendung, wie beispielsweise für Steuerungsaufgaben, verwendet werden kann.

Bei dem Eingangsbild handelt es sich insbesondere um ein Umgebungsbild, also um eine virtuelle Abbildung der Umgebung. Die konkrete Ausgestaltung des Eingangsbildes hängt von dem Anwendungsgebiet beziehungsweise der Steuerungsaufgabe des Verfahrens für die Segmentierung ab. Geht es zum Beispiel um das Steuern einer Maschine, kann es sich bei dem Eingangsbild um ein Produktbild oder die Umgebung der Maschine handeln. Geht es zum Beispiel um das Steuern eines Fahrzeugs, kann das Eingangsbild die Umgebung des Fahrzeugs abbilden oder darstellen. Das Eingangsbild kann ein zweidimensionales oder dreidimensionales oder mehrdimensionales Bild sein. Im Zusammenhang mit einem dreidimensionalen Bild kann der jeweilige Pixel auch als Voxel bezeichnet werden.

Die Segmentierung basiert vorzugsweise auf künstlicher Intelligenz. Für die Segmentierung wird insbesondere ein neuronales Netzwerk eingesetzt und/oder trainiert. Das Segmentierungsbild ist das Ergebnis der Segmentierung des Eingangsbilds. Das Segmentierungsbild zeigt pixelbasiert eine oder mehrere relevante Objektkategorien. Bei der Segmentierung werden Bereiche eines Bildes einer bestimmten Objektkategorie oder Objektkategorie zugeordnet. Die Zuordnung erfolgt vorzugsweise pixelbasiert. Es wird also für jeden Pixel des Eingangsbildes entschieden, welcher Objektkategorie es angehört, also eine Klassifikationsaufgabe für jeden Pixel des Eingangsbildes gelöst. Pixel, die gemäß der Klassifikation derselben oder gleichen Objektkategorie angehören, werden in dem Segmentierungsbild, auch Segmentierungsmaske genannt, zusammengefasst. Das Ergebnis, also die Klassifikationsaufgabe, hängt insbesondere von dem Anwendungsgebiet beziehungsweise der Steuerungsaufgabe des erfindungsgemäßen Verfahrens ab. Im Zusammenhang mit dem Steuern einer Maschine kann die Klassifikationsaufgabe zum Beispiel in der Erkennung des mittels der Maschine herzustellenden Produktes liegen. Bei autonom fahrenden Zügen kann die Klassifikationsaufgabe zum Beispiel in der Gleiserkennung oder Hinderniserkennung liegen. Konkrete Beispiele, wie die Segmentierung umgesetzt sein kann, sind im späteren Verlauf noch näher beschrieben.

Die jeweilige Relevanzkarte gibt Auskunft darüber, in welchem Maß und in welchem Grad einzelne Bereiche eines durch Machine Learning (Maschinenlernen) verarbeiteten Eingangsbildes, eine Klassifizierung als ein bestimmtes Objekt bestimmen. Damit wird ein anschaulicher Einblick in die Entscheidung eines neuronalen Netzwerks für die Bildanalyse erreicht, indem die Beiträge jeweils einzelner Pixel- oder Bildbereiche zur Aktivierung des neuronalen Netzwerks im Hinblick auf eine getroffene Entscheidung des Netzwerks bestimmt werden. Die Relevanzkarte kann zum Beispiel eine sogenannte Saliency Map oder eine sogenannte Self Attention Map sein. Die Art der Relevanzkarte hängt insbesondere von dem verwendeten Berechnungsverfahren ab.

Zur Bestimmung der Relevanzkarten wird für die Segmentierungsmaske für jeden Pixel der gemeinsamen Objektkategorie jeweils eine Relevanzkarte nach einem gängigen Verfahren oder Algorithmus berechnet.

Zur Bestimmung der Relevanzkarte kann zum Beispiel der GradCam Algorithmus verwendet werden, wie er zum Beispiel in der Veröffentlichung von Omeiza, Daniel & Speakman, Skyler & Cintas, Celia & Weldemariam, Komminist. (2019). Smooth Grad-CAM++: An Enhanced Inference Level Visualization Technique for Deep Convolutional Neural Network Models. 10.48550/arXiv.1908.0122 beschrieben ist. Eine weitere Möglichkeit zur Bestimmung einer Relevanzkarte liegt zum Beispiel in der Layer-Wise-Relevance-Propagation (LRP), wie sie zum Beispiel in der Veröffentlichung von Montavon, Grégoire & Binder, Alexander & Lapuschkin, Sebastian & Samek, Wojciech & Müller, Klaus-Robert. (2019). Layer-Wise Relevance Propagation: An Overview. 10.1007/978-3-030-28954-6_10 beschrieben ist.

Je nach Wahl des Berechnungsverfahrens werden Bildbereiche oder Pixel unterschiedlich gewichtet, da das Berechnungsverfahren den Einfluss von Bildanteilen unterschiedlich eingehen lässt und damit unterschiedliche Fragestellungen bezüglich der Wichtigkeit bei der Entscheidung beantwortet werden können. Abhängig von dem Berechnungsverfahren liefert die jeweilige Relevanzkarte also für jeden Pixel des Eingangsbildes den Relevanzwert zum Ermitteln der jeweiligen Objektkategorie bei der Segmentierung. Der Relevanzwert gibt also das Maß oder den Grad an, inwiefern die einzelnen Bildbereiche eine Klassifizierung als ein bestimmtes Objekt eingehen.

Die Varianz liefert ein Streuungsmaß dieser Relevanzwerte der Pixel in den ermittelten Relevanzkarten. Die Varianz kann zum Beispiel in dem Segmentierungsbild oder einer Kombinationsrelevanzkarte aus den ermittelten Relevanzkarten ermittelt werden. Für die Kombinationsrelevanzkarte werden die ermitteln Relevanzkarten zusammengeführt oder fusioniert, indem zum Beispiel ein Mittelwert der Relevanzwerte für alle Pixel des Eingangsbilds der gemeinsamen Objektkategorie ermittelt wird. Die Kombinationsrelevanzkarte repräsentiert daher das Mittel der Relevanzkarten, die für die Pixel der gemeinsamen Objektkategorie ermittelt worden sind. Es werden also die Relevanzwerte aller Relevanzkarten miteinander verglichen und der Mittelwert gebildet.

Vorzugsweise werden bei der Segmentierung mehrere Zielkategorien oder Unterkategorien segmentiert. Das Ergebnis der individuellen Zielkategorien kann am Ende aggregiert, also zusammengeführt werden, um potenzielle Widersprüche oder Übereinstimmungen entsprechend zu gewichten. Im Zusammenhang mit autonom fahrenden Zügen kann zum Beispiel zwischen einem Gleisbett mit Schotter oder einem Gleisbett mit Asphalt als die Kategorien unterschieden werden. Alternativ kann zum Beispiel das Gleisbett und ein Hindernis im Gleisbett als jeweilige Zielkategorien ermittelt werden und anhand des Konfidenzmaßes, also der Konfidenzmaske entschieden werden, ob zum Beispiel tatsächlich ein Hindernis, wie beispielsweise ein Baum, im Gleisbett liegt oder nicht.

Zu der Erfindung gehörten auch Ausführungsformen, durch die sich zusätzliche Vorteile ergeben.

In einer Ausführungsform wird die Konfidenzmaske auch in Abhängigkeit von einem Mittelwert der Relevanzwerte der Pixel des ermittelten Satzes der Relevanzkarten ermittelt. Das heißt, es wird die zuvor genannte Kombinationsrelevanzkarte für die Bewertung der Zuverlässigkeit des Segmentierungsbildes verwendet. In der Kombinationsrelevanzkarte sind die einzelnen Bildbereiche oder Pixel in Abhängigkeit von ihren Relevanzwerten, und somit dem Einfluss den die Pixel bei der Segmentierung hatten, hervorgehoben.

In einer Ausführungsform wird die Konfidenzmaske ermittelt, indem jeweils ein Variationskoeffizient durch Vergleichen der Varianz und des Mittelwerts der Relevanzwerte für jeden Pixel in dem Eingangsbild bestimmt wird. Der Variationskoeffizient liefert ein Maß für die Abweichung, ob die einzelnen Pixel- oder Bildbereiche einer gemeinsamen Objektkategorie angehören oder als unterschiedliche Objekte und somit unterschiedliche Objektkategorien erkannt wurden. Wurden die Objekte als unterschiedlich erkannt, hat also ein Wechsel der Objektkategorie bei der Segmentierung stattgefunden.

Das Vergleichen umfasst insbesondere eine Division der Varianz durch den jeweiligen Mittelwert. Vorzugsweise wird zusätzlich ein Regularisierungswert berücksichtigt. Der Regularisierungswert trägt der praktischen Komplikation Rechnung, dass der Mittelwert der Relevanzwerte für einzelne Pixel auch Null sein kann. Vorzugsweise wird der Absolutwert der jeweiligen Mittelwerte für den jeweiligen Pixel für die Berechnung verwendet.

Der Variationskoeffizient der Verteilung der Relevanz der Bildpixel in Bezug auf die Pixel der gemeinsamen Objektkategorie erlaubt es zu bestimmen, ob die Bedeutung eines Pixels des Eingangsbildes für die Segmentierung wenig oder stark über die segmentierte Einheit variiert. Somit kann bestimmt werden, ob ein Pixel gleichbleibenden Einfluss auf das Ergebnis der Segmentierung hat oder bei unterschiedlichen Eingangsdaten stark schwankenden Einfluss aufweist. Auf Grundlage des Variationskoeffizienten und den bereits bekannten Relevanzkarten kann somit die Konfidenzmaske bestimmt werden, die den vertrauenswürdigen Teil der Segmentierungsmaske bestimmt und es ist damit möglich, innerhalb des Segmentierungsergebnisses die zuverlässig bestimmte Segmentierung von fragwürdigen Teilen zu trennen. Es wird also eine Konfidenzinformation für das Segmentierungsergebnis ermittelt. Dies wird als zumindest partiell unabhängiger Weg angesehen, um das erhaltene Segmentierungsergebnis zu plausibilisieren beziehungsweise zu ermitteln, in welchen Bereichen das Segmentierungsergebnis vertrauenswürdig ist und in welchen Bereichen es abhängig von der Anwendung nur eingeschränkt verwendet werden sollte.

In einer Ausführungsform wird gemäß dem vorgegebenen Vergleichskriterium ein Mittelwert der jeweiligen Variationskoeffizienten mit zumindest einem vorgegebenen Grenzwert verglichen. In Abhängigkeit von einem Erreichen, also einem Überschreiten oder Unterschreiten des Grenzwerts, wird die jeweilige Konfidenzklasse festgelegt.

Das Festlegen der Konfidenzklasse erfolgt somit durch Grenzwertevergleich. Der jeweilige Grenzwert und die Zuordnung zu der jeweiligen Konfidenzklasse zu den verschiedenen Grenzwertebereichen kann zum Beispiel in dem Vergleichskriterium hinterlegt sein. Dazu kann das Vergleichskriterium zum Beispiel eine Zuordnungsvorschrift, beispielsweise in Form einer Look-up-Table umfassen. Überschreitet der Mittelwert der jeweiligen Variationskoeffizienten zum Beispiel den Grenzwert, kann eine Konfidenzklasse mit hoher Vertrauenswürdigkeit oder Zuverlässigkeit zugeordnet werden. Unterschreitet der Mittelwert jedoch den jeweiligen Grenzwert, kann eine Konfidenzklasse mit im Vergleich dazu niedriger Konfidenz zugeordnet werden.

In einer Ausführungsform wird der Randbereich vorgegeben, also durch die Segmentierung bestimmt, indem für jeden Randpixel des Segmentierungsbildes, an welchem gemäß der Segmentierung ein Wechsel der Objektkategorie ermittelt wurde, ein Bandbereich vorbestimmter Breite festgelegt wird. Für den festgelegten Bandbereich wird abschnittsweise jeweils ein Umgebungsbereich vorbestimmter Größe festgelegt. Dieser Satz an Umgebungsbereichen, also die Umgebungsbereiche für jeden Abschnitt, bilden nun den Randbereich zum Ermitteln der zumindest einen Konfidenzklasse.

Das heißt die Bereiche, in denen ein Wechsel der Objektkategorie ermittelt wurde, werden in Abschnitte unterteilt, sodass für jeden Abschnitt die Konfidenzklasse separat bestimmt werden kann. Anschließend werden Abschnitte, für die dieselbe Konfidenzklasse bestimmt wurde, zusammengefasst. So kann der Randbereich in Abschnitte unterschiedlicher Konfidenzklassen aufgeteilt werden. Dass ein Wechsel der Objektkategorie stattgefunden hat, kann zum Beispiel anhand der Varianz, insbesondere des Variationskoeffizienten, detektiert werden. Alternativ kann zum Beispiel ein Kantenerkennungsalgorithmus auf das Segmentierungsergebnis angewendet werden.

Der Bandbereich kann zum Beispiel auch als Analysemaske bezeichnet werden. Dazu wird ein Band mit einer vorbestimmten Anzahl von Pixeln vom Randpixel entfernt und somit sozusagen ein Band um den Randpixel herum gebildet. Für diese Analysemaske werden nun die Umgebungsbereiche bestimmt. Dazu wird die Analysemaske in vorbestimmte Abschnitte, also die Umgebungsbereiche, unterteilt. Die Umgebungsbereiche können zum Beispiel als Kreis vorbestimmten Durchmessers mit einem Mittelpunkt eines Pixels in dem Bandbereich ausgestaltet sein. Vorzugsweise können sich die Umgebungsbereiche zumindest teilweise oder abschnittsweise überlappen.

In einer Ausführungsform werden zum Ermitteln der Konfidenzmaske diejenigen Abschnitte des Segmentierungsbildes, für die in dem Randbereich dieselbe Konfidenzklasse ermittelt wurde, zusammengeführt und der jeweils für die zugehörigen Randbereiche ermittelten Konfidenzklasse zugeordnet. Die für die Randbereiche ermittelten Konfidenzklassen werden also auf die Segmentierungsmaske angewendet. Es wird also die Konfidenz der umliegenden Bereiche der gemeinsamen Objektkategorie genutzt, um auf die Konfidenz der Segmentierung des Objekts der Objektkategorie zu schließen. Dafür werden die Bereiche innerhalb der Segmentierung gebildet, deren umliegende Bereiche der gleichen Konfidenzklasse zugeordnet sind. Es kann also in dem Segmentierungsbild und somit für die Segmentierungsmaske mehrere Abschnitte mit unterschiedlichen Konfidenzklassen geben, je nachdem wie die Konfidenz der Randbereiche bewertet wurde.

In einer Ausführungsform wird das Eingangsbild mittels einer Kamera erzeugt. Das heißt, bei dem Eingangsbild handelt es sich vorzugsweise um ein Kamerabild.

In einer Ausführungsform wird das Segmentierungsbild basierend auf dem Eingangsbild mittels eines Segmentierungsalgorithmus erzeugt. Vorzugsweise handelt es sich bei dem Segmentierungsalgorithmus um einen Algorithmus zur semantischen Segmentierung.

Algorithmen zur semantischen Segmentierung sind hinreichend bekannt. In der Veröffentlichung von O. Ronneberger et al: "U-Net: Convolutional Networks for Biomedical Image Segmentation" (arXiv:1505.04597) wird beispielsweise die U-Net-Architektur beschrieben, eine weit verbreitete CNN-Architektur zur Segmentierung von Bildern, die jedoch auch für andere Computer-Vision-Aufgaben, insbesondere Bild-zu-Bild-Aufgaben, verwendet werden kann.

In einer Ausführungsform ist der Segmentierungsalgorithmus ein trainiertes Maschinenlernmodell (MLM). Allgemein ausgedrückt, kann ein trainiertes MLM kognitive Funktionen nachstellen, die Menschen mit einem anderen menschlichen Verstand in Verbindung bringen. Insbesondere kann das MLM durch Trainieren basierend auf Trainingsdaten in der Lage sein, sich an neue Umstände anzupassen und Muster zu detektieren und zu extrapolieren. Ein anderer Begriff für ein trainiertes MLM ist "trainierte Funktion".

Im Allgemeinen können die Parameter eines MLM durch Trainieren angepasst oder aktualisiert werden. Dabei können insbesondere überwachtes Trainieren, halbüberwachtes Trainieren, unüberwachtes Trainieren, Verstärkungslernen (englisch: reinforcement learning) und/oder aktives Lernen zum Einsatz kommen. Darüber hinaus kann Repräsentationslernen (englisch: representation learning), das auch als Merkmalslernen (englisch: feature learning) bezeichnet wird, verwendet werden. Insbesondere können die Parameter der MLMs iterativ durch mehrere Schritte des Trainierens angepasst werden. Insbesondere kann beim Trainieren eine bestimmte Verlustfunktion, die auch als Kostenfunktion bezeichnet wird, minimiert werden. Beim Trainieren eines künstlichen neuronalen Netzwerks, ANN (englisch: artificial neural network), kann insbesondere der Backpropagation-Algorithmus verwendet werden.

Ein MLM kann insbesondere ein ANN, eine Support-Vector-Maschine, einen Entscheidungsbaum und/oder ein Bayes'sches Netzwerk beinhalten, und/oder das MLM kann auf k-means-Clustering, Q-learning, genetischen Algorithmen und/oder Assoziationsregeln basieren. Insbesondere kann ein ANN ein tiefes neuronales Netzwerk, ein faltendes neuronales Netzwerk, CNN (englisch: convolutional neural network) oder ein faltendes tiefes neuronales Netzwerk sein oder beinhalten. Außerdem kann ein ANN ein adverses Netzwerk (englisch: adversarial network), ein tiefes adverses Netzwerk und/oder ein generatives adverses Netzwerk, GAN, sein. Des Weiteren kann ein ANN ein Foundation Model (Basismodell) oder Transformer Model (Aufmerksamkeitsmodell) sein oder beinhalten.

Für Anwendungsfälle oder Anwendungssituationen, die sich bei dem erfindungsgemäßen computerimplementierten Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem weiteren Aspekt der Erfindung wird ein Computerprogramm mit Befehlen angegeben. Wenn die Befehle durch ein Datenverarbeitungssystem ausgeführt werden, veranlassen die Befehle das Datenverarbeitungssystem dazu, ein erfindungsgemäßes computerimplementiertes Verfahren durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, insbesondere ein physisches und/oder nicht-flüchtiges computerlesbares Speichermedium, das ein erfindungsgemäßes Computerprogramm speichert.

Das Computerprogramm und das computerlesbare Speichermedium sind jeweils Computerprogrammprodukte mit den Befehlen.

Weitere Ausführungsformen des erfindungsgemäßen Computerprogrammprodukts folgen unmittelbar aus den verschiedenen Ausgestaltungen des erfindungsgemäßen computerimplementierten Verfahrens und umgekehrt. Insbesondere lassen sich einzelne Merkmale und entsprechende Erläuterungen sowie Vorteile bezüglich der verschiedenen Ausführungsformen zu den erfindungsgemäßen Verfahren analog auf die entsprechenden Ausführungsformen des erfindungsgemäßen Computerprogrammprodukts übertragen.

Gemäß einem weiteren Aspekt betrifft die Erfindung ein Datenverarbeitungssystem, welches dazu eingerichtet ist, ein erfindungsgemäßes computerimplementiertes Verfahren zum Bewerten einer Zuverlässigkeit eines Segmentierungsbildes durchzuführen.

Unter einem Datenverarbeitungssystem kann insbesondere ein Datenverarbeitungsgerät verstanden werden, das einen Verarbeitungsschaltkreis enthält. Das Datenverarbeitungssystem kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen ebenso wie ein in Hardware implementierter Datenverarbeitungsprozess.

Das Datenverarbeitungssystem kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Das Datenverarbeitungsgerät kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Das Datenverarbeitungssystem kann auch einen physischen oder einen virtuellen Verbund von Computern oder sonstigen der genannten Einheiten beinhalten.

In verschiedenen Ausführungsbeispielen beinhaltet das Datenverarbeitungssystem eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Sofern nicht anders angegeben, können alle Schritte des computerimplementierten Verfahrens von einem Datenverarbeitungssystem durchgeführt werden, das wenigstens ein Datenverarbeitungsgerät beinhaltet. Insbesondere ist das wenigstens eine Datenverarbeitungsgerät dazu eingerichtet oder angepasst, die Schritte des computerimplementierten Verfahrens auszuführen. Zu diesem Zweck kann das wenigstens eine Datenverarbeitungsgerät beispielsweise ein Computerprogramm speichern, das Befehle beinhaltet, die, wenn sie von dem wenigstens einen Datenverarbeitungsgerät ausgeführt werden, das wenigstens eine Datenverarbeitungsgerät veranlassen, das computerimplementierte Verfahren auszuführen. Das computerimplementierte Verfahren kann auch ganz oder teilweise in Hardware implementiert sein. Die Ausdrücke "Datenverarbeitungssystem" und "wenigstens ein Datenverarbeitungsgerät" können hier und im Folgenden austauschbar verwendet werden. Dies gilt auch für entsprechende davon abgeleitete Ausdrücke.

Für den Fall, dass das Datenverarbeitungssystem zwei oder mehr Datenverarbeitungsgeräte beinhaltet, können bestimmte von dem wenigstens einen Datenverarbeitungsgerät durchgeführte Schritte auch so verstanden werden, dass verschiedene Datenverarbeitungsgeräte verschiedene Schritte oder verschiedene Teile eines Schrittes durchführen. Insbesondere ist es nicht erforderlich, dass jedes Datenverarbeitungsgerät die Schritte durchführt. Mit anderen Worten kann die Durchführung der Schritte auf die zwei oder mehr Datenverarbeitungsgeräte verteilt werden.

Vorzugsweise kann das Datenverarbeitungssystem das zuvor beschriebene Computerprogramm ausführen.

Weitere Ausführungsformen des erfindungsgemäßen Datenverarbeitungssystems folgen unmittelbar aus den verschiedenen Ausgestaltungen des erfindungsgemäßen computerimplementierten Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf die entsprechenden Ausführungsformen des erfindungsgemäßen Datenverarbeitungssystems übertragen.

Gemäß einem weiteren Aspekt betrifft die Erfindung ein Verfahren zum Betreiben eines Steuergeräts. Für das Steuergerät wird dabei ein erfindungsgemäßes Datenverarbeitungssystem bereitgestellt. In Abhängigkeit von der zumindest einen Konfidenzklasse der Konfidenzmaske und in Abhängigkeit von dem Segmentierungsbild wird dabei durch das Steuergerät ein Steuersignal zum Durchführen einer Steuerungsaufgabe erzeugt. Die Steuerungsaufgabe hängt dabei insbesondere von dem System ab, in dem das Steuergerät zum Steuern eingesetzt wird. Das Steuersignal kann zum Beispiel einem oder mehreren Aktuatoren des Systems, in dem das Steuergerät eingesetzt wird, bereitgestellt werden. Der eine oder die mehreren Aktuatoren können, basierend auf dem wenigstens einem Steuersignal, die jeweilige Steuerungsaufgabe ausführen.

Insbesondere ist das erfindungsgemäße Steuergerät, vorzugsweise das beinhaltete Datenverarbeitungssystem zum Durchführen eines erfindungsgemäßen computerimplementierten Verfahrens ausgebildet oder programmiert. Insbesondere führt das erfindungsgemäße Steuergerät beziehungsweise das Datenverarbeitungssystem das erfindungsgemäße Verfahren durch.

Weitere Ausführungen des erfindungsgemäßen Verfahrens zum Betreiben eines Steuergeräts folgen unmittelbar aus den verschiedenen Ausgestaltungen des erfindungsgemäßen computerimplementierten Verfahrens und umgekehrt. Insbesondere lassen sich die einzelnen Merkmale und entsprechenden Erläuterungen sowie Vorteile bezüglich der verschiedenen Ausführungsformen zu den erfindungsgemäßen Verfahren analog auch auf entsprechende Ausführungsformen des erfindungsgemäßen Verfahrens zum Steuern des Steuergeräts übertragen.

Aus jeder Ausführungsform des computerimplementierten Verfahrens ergibt sich eine entsprechende Ausführungsform eines Verfahrens zum Betreiben eines Steuergeräts, das nicht rein computerimplementiert ist, indem entsprechende Schritte zur Erzeugung des Steuersignals zum Durchführen der Steuerungsaufgabe einbezogen werden.

In einer Ausführungsform wird das Steuergerät in einem autonomen Fahrzeug bereitgestellt und die Steuerungsaufgabe betrifft das Führen des autonomen Fahrzeugs. Das heißt, es geht darum, das Fahrzeug autonom oder automatisch zu führen, also zu lenken oder zu steuern. Dazu können mittels dem Steuersignal zum Beispiel einer oder mehrere Bremsaktuatoren oder einer oder mehrere Lenkaktuatoren oder ein oder mehrere Antriebsmotoren des Fahrzeugs angesteuert werden. Mittels des Steuersignals kann somit in eine Längs- oder Quersteuerung des Fahrzeugs eingegriffen werden, um das Fahrzeug zumindest teilweise automatisch zu führen.

Gemäß einem weiteren Aspekt betrifft die Erfindung ein autonomes Fahrzeug mit einem Steuergerät, welches dazu eingerichtet ist, ein Verfahren zum Betreiben eines Steuergeräts, wie es zuvor beschrieben wurde, auszuführen.

Das Fahrzeug ist bevorzugt als Schienenfahrzeug, insbesondere als Zug oder Zugverband oder als Eisenbahn beispielsweise für die Personen- oder Güterbeförderung ausgestaltet. Alternativ ist das Fahrzeug zum Beispiel ein Kraftfahrzeug, insbesondere ein Personenkraftwagen oder ein Lastkraftwagen oder ein Personenbus oder ein Motorrad.

Das Fahrzeug wird autonom geführt. Dazu umfasst das Fahrzeug vorzugsweise ein elektronisches Fahrzeugführungssystem. Unter einem elektronischen Fahrzeugführungssystem kann ein elektronisches System verstanden werden, das dazu eingerichtet ist, ein Fahrzeug vollautomatisch oder vollautonom zu führen, insbesondere ohne dass ein Eingriff in eine Steuerung durch einen Fahrzeugführer erforderlich ist. Das Fahrzeug führt alle erforderlichen Funktionen, wie Lenk-, Brems- und/oder Beschleunigungsmanöver, die Beobachtung und Erfassung der Umgebung, wie beispielsweise einer Schienenführung oder des Straßenverkehrs sowie entsprechende Reaktionen automatisch durch.

Im Zusammenhang mit einem Kraftfahrzeug kann das elektronische Fahrzeugführungssystem insbesondere einen vollautomatischen oder vollautonomen Fahrmodus des Fahrzeugs nach Stufe 5 der Klassifizierung gemäß SAE J3016 implementieren. Unter einem elektronischen Fahrzeugführungssystem kann auch ein Fahrerassistenzsystem (englisch: "advanced driver assistance system", ADAS) verstanden werden, welches den Fahrzeugführer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß der SAE J3016-Klassifizierung implementieren. Hier und im Folgenden bezieht sich "SAE J3016" auf die entsprechende Norm in der Version vom April 2021.

Ist im Rahmen der vorliegenden Offenbarung die Rede davon, dass eine Komponente des autonomen Fahrzeugs, insbesondere das Steuergerät und/oder das Datenverarbeitungssystem dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

In Zusammenhang mit dem autonomen Zug kann die Aufgabe der Segmentierung zum Beispiel in einer Gleiserkennung, einer Hinderniserkennung, einer Bahnsteigerkennung oder einer Erkennung von Bahnübergängen liegen. In Zusammenhang mit einem Kraftfahrzeug kann die Aufgabe der Segmentierung zum Beispiel im Detektieren eines Fahrbahnverlaufs oder zum Erkennen von Kreuzungssituationen oder Ampeln oder zum Beispiel Hindernissen, wie Personen im Straßenverkehr, legen. Natürlich sind auch weitere Anwendungsbeispiele des beschriebenen Verfahrens zur Bewertung eines Segmentierungsbildes denkbar. Zum Beispiel kann das Verfahren für die Optimierung eines Autofokus-Algorithmus, wie er zum Beispiel in modernen Digitalkameras verwendet wird, verwendet werden.

Weitere Ausführungsformen des erfindungsgemäßen autonomen Fahrzeugs folgen unmittelbar aus den verschiedenen Ausgestaltungen des erfindungsgemäßen Verfahrens zum Betreiben eines Steuergeräts beziehungsweise des erfindungsgemäßen computerimplementierten Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auch auf entsprechende Ausführungsformen des erfindungsgemäßen autonomen Fahrzeugs übertragen. Insbesondere ist das erfindungsgemäße autonome Fahrzeug zum Durchführen eines erfindungsgemäßen Verfahrens ausgebildet oder programmiert. Insbesondere führt das erfindungsgemäße autonome Fahrzeug das erfindungsgemäße Verfahren durch.

Oben und im Folgenden wird die erfindungsgemäße Lösung sowohl in Bezug auf die beanspruchten Systeme als auch in Bezug auf die beanspruchten Verfahren beschrieben.

Merkmale, Vorteile oder alternative Ausführungsformen können den anderen beanspruchten Gegenständen zugeordnet werden und andersherum. Mit anderen Worten können die Ansprüche und Ausführungsformen für die Systeme durch Merkmale verbessert werden, die im Zusammenhang mit den jeweiligen Verfahren beschrieben oder beansprucht werden. In diesem Fall werden die funktionalen Merkmale des Verfahrens durch physische Einheiten des Systems implementiert.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen

FIG 1   eine schematische Darstellung einer beispielhaften Ausführungsform eines autonom fahrenden Zuges mit einem Steuergerät, das zur Bewertung einer Zuverlässigkeit eines Segmentierungsbildes bei der Gleisbetterkennung eingesetzt werden kann;

FIG 2   ein schematisches Verfahrensablaufdiagramm einer beispielhaften Ausführungsform eines Verfahrens zum Bewerten einer Zuverlässigkeit eines Segmentierungsbildes, das zum Beispiel mittels dem Steuergerät gemäß FIG 1 ausgeführt werden kann;

FIG 3    eine schematische Darstellung eines beispielhaften Eingangsbildes aus dem das Segmentierungsbild ermittelt werden kann;

FIG 4    eine schematische Darstellung eines Segmentierungsbildes für das Eingangsbild gemäß FIG 3;

FIG 5    eine schematische Darstellung einer Kombinationsrelevanzkarte für das Segmentierungsbild gemäß FIG 4, die aus Relevanzwerten der Pixel eines ermittelten Satzes an Relevanzkarten bestimmt werden kann;

FIG 6    eine schematische Darstellung einer Varianz von Relevanzwerten der Pixel für einen ermittelten Satz an Relevanzkarten;

FIG 7    eine schematische Darstellung von Konfidenzklassen für Randbereiche für das Segmentierungsbild gemäß FIG 4; und

FIG 8    eine schematische Darstellung einer Konfidenzmaske für das Segmentierungsbild gemäß FIG 4.

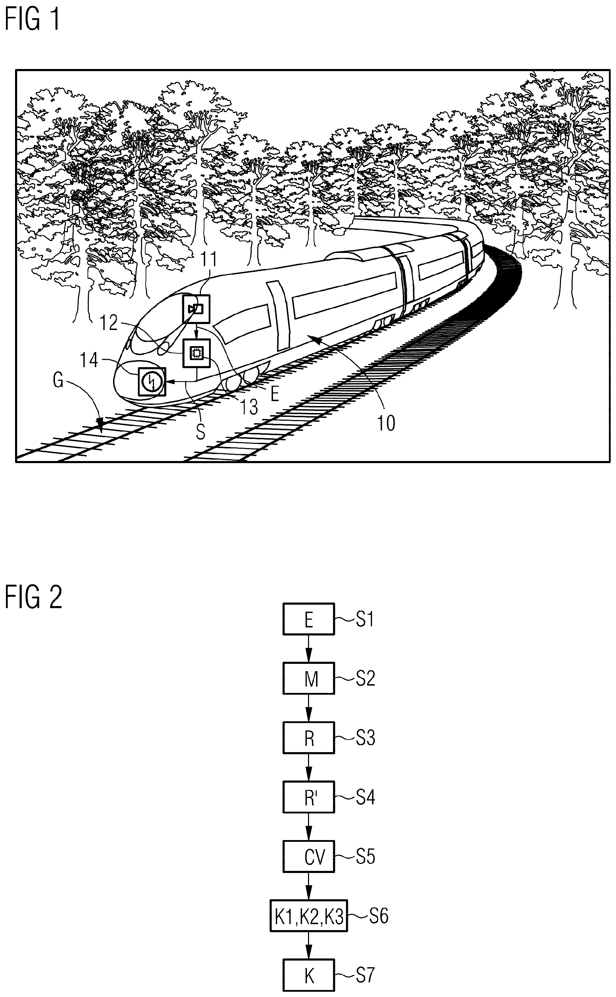

FIG 1 zeigt in schematischer Darstellung einen autonom fahrenden Zug 10 als Beispiel für ein autonomes Fahrzeug. Der Zug 10 bewegt sich in der in FIG 1 dargestellten Situation auf Gleisen entlang eines Gleisbetts G. Der Zug 10 soll autonom gesteuert oder betrieben werden. Das heißt, die Steuerung erfolgt ohne Zutun eines Menschen. Der Zug 10 führt alle erforderlichen Funktionen, wie Lenk-, Brems- oder Beschleunigungsmanöver, die Beobachtung und Erfassung der Umgebung, wie beispielsweise der Schienenführung, sowie entsprechende Reaktionen darauf automatisch durch. Dazu kann der Zug 10 ein elektronisches Fahrzeugführungssystem aufweisen. Das elektronische Fahrzeugführungssystem ist vorliegend beispielsweise durch eine Kamera 11 und ein Steuergerät 12 dargestellt. Mittels der Kamera 11 wird die Umgebung des Zuges 10, insbesondere das Gleisbett G, erfasst. Die Kamera 11 stellt die erfasste Umgebung in Form eines Eingangsbildes E zur Auswertung an das Steuergerät 12 bereit. Das Steuergerät 12 empfängt das Eingangsbild und kann das Eingangsbild E analysieren oder auswerten. Beim Auswerten geht es insbesondere darum, Objekte anhand von Objektkategorien in dem Eingangsbild E zu erkennen und in Abhängigkeit von den erkannten Objektkategorien die Steuerung des Zuges 10 autonom durchzuführen. Zum Steuern kann das Steuergerät 12, zum Beispiel ein Steuersignal S, an eine oder mehrere Aktuatoren des Zuges 10 bereitstellen oder übermitteln. Vorliegend ist als Beispiel für einen solchen Aktuator ein Elektromotor 14 dargestellt. Durch Ansteuern mit dem Steuersignal S kann der Zug 10 somit beschleunigt oder gebremst werden.

Das Auswerten des Eingangsbildes E erfolgt nach einer bekannten Methode der künstlichen Intelligenz, nämlich der sogenannten Segmentierung, insbesondere der semantischen Segmentierung. Dazu umfasst das Steuergerät 12 ein Datenverarbeitungssystem 13. Das Datenverarbeitungssystem umfasst zumindest einen Mikroprozessor oder Mikrocontroller. Auf dem Datenverarbeitungssystem 13 ist ein Segmentierungsalgorithmus implementiert. Der Segmentierungsalgorithmus liegt beispielsweise als trainiertes Maschinenlernmodell vor und kann somit als künstliches neuronales Netzwerk verstanden werden.

Unter Anwendung des Segmentierungsalgorithmus auf das Eingangsbild E wird ein Segmentierungsbild M, das auch als Segmentierungsmaske bezeichnet werden kann, erzeugt. In dem Segmentierungsbild M sind eine oder mehrere Objekte gemäß ihren Objektkategorien, die für die jeweilige Steuerungsaufgabe relevant sind, dargestellt. Vorliegend kann es sich zum Beispiel um den Verlauf der Schienenwege in dem Gleisbett G handeln. Das Segmentierungsergebnis spielt eine wichtige Rolle für den Abgleich mit Karteninformationen, zum Beispiel zur Ortsbestimmung oder bei der Beurteilung, ob im Gleisbett G zum Beispiel ein Hindernis oder eine Gefährdung vorhanden ist. In Abhängigkeit von der Segmentierung erfolgt also die Steuerung des Zuges 10, dieser wird also zum Beispiel beschleunigt oder gebremst.

Dabei ist es wichtig, dass die Segmentierung anhand der gewünschten Bildeigenschaften korrekt durchgeführt wurde. Zur Überprüfung des Segmentierungsergebnisses wird deshalb die Güte der Segmentierung bewertet. Das soll insbesondere in Laufzeit, also in Echtzeit und somit während der Fahrt mit dem Zug 10 erfolgen.

FIG 2 zeigt hierzu beispielhaft ein schematisches Verfahrensablaufdiagramm für ein Verfahren zum Bewerten einer Zuverlässigkeit eines Segmentierungsbildes M, das als Ergebnis einer Segmentierung des Eingangsbildes E zumindest eine Objektkategorie bereitstellt. Das in FIG 2 beispielhaft beschriebene Verfahren kann zum Beispiel mit dem Datenverarbeitungssystem 13 ausgeführt oder durchgeführt werden. Vorliegend handelt sich bei der Objektkategorie insbesondere um das Gleisbett G, vorzugsweise dessen Gleise oder Schienen G1, G2, G3 mittels welcher die Schienenführung für den Zug 10 vorgegeben sind.

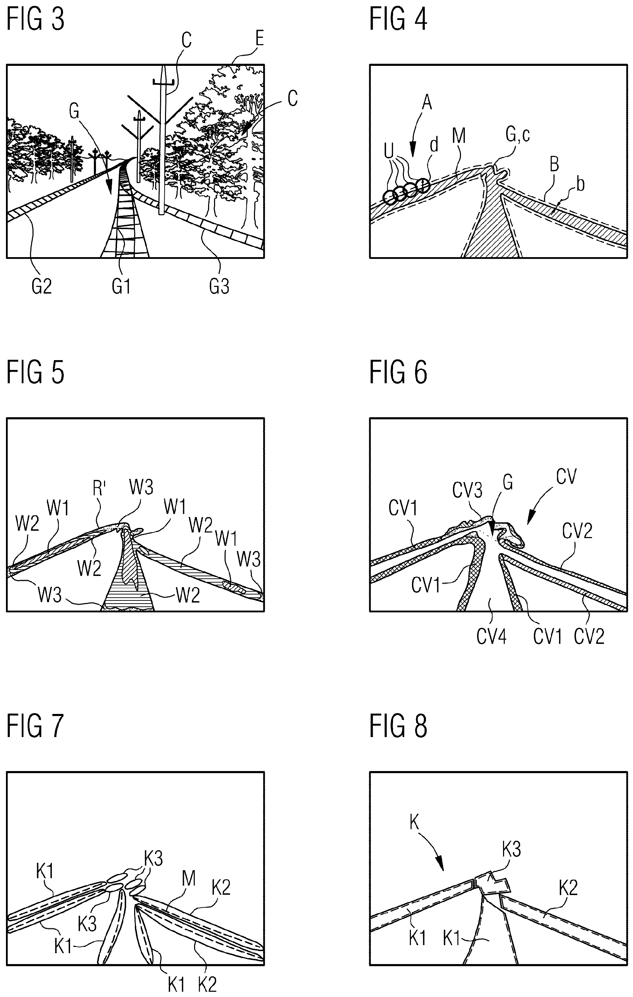

In dem Verfahren wird in einem Schritt S1 zunächst das Eingangsbild E mittels der Kamera 11 erzeugt oder aufgenommen. FIG 3 zeigt eine beispielhafte Ausgestaltung für das Eingangsbild E. Auf dem Eingangsbild E ist dabei ein Bereich in Fahrtrichtung vor dem Zug 10 zu sehen. Das Eingangsbild E zeigt das Gleisbett G mit den Schienen G1, G2, G3 sowie weitere Umgebungsobjekte C, wie zum Beispiel Büsche und Oberleitungsmasten.

In einem Schritt S2 wird aus dem Eingangsbild E das Segmentierungsbild M, also die Segmentierungsmaske extrahiert. Dazu wird das Segmentierungsbild M unter Verwendung des Segmentierungsalgorithmus mittels dem Datenverarbeitungsgerät 13 ausgewertet oder analysiert. Dabei wird bei der Segmentierung dem neuronalen Netzwerk die Aufgabe gestellt, zu entscheiden, welcher Bereich des Eingangsbildes E einer bestimmten Objektkategorie oder Objektklasse zugeordnet ist. Es wird also für jeden Pixel des Eingangsbildes E entschieden, welcher Objektkategorie c es angehört. Es wird also eine Klassifikationsaufgabe für jeden Pixel des Eingangsbildes E gelöst. Alle Pixel, die gemäß der Klassifikation der gleichen Objektkategorie c angehören, werden in dem Segmentierungsbild M zusammengefasst.

FIG 4 zeigt beispielhaft das Segmentierungsbild M, wie es für das Eingangsbild E gemäß FIG 3 ermittelt werden kann. Wie in FIG 4 zu sehen ist, ist die mittels Segmentierung erkannte Objektkategorie c, hier also der vom Segmentierungsalgorithmus erkannte Verlauf des Gleisbetts G nachgebildet. Der Verlauf des Gleisbetts G wird dabei wie eine Maske dargestellt und ist in FIG 4 durch den schraffierten Bereich angedeutet.

In einem Schritt S3 werden für das Segmentierungsbild M sogenannte Relevanzkarten R, zum Beispiel in Form von an sich bekannten Saliency Maps erzeugt. Die Relevanzkarten R geben Auskunft darüber in welchem Maß und in welchem Grad einzelne Bereiche des verarbeiteten Eingangsbildes E eine Klassifizierung, also ein bestimmtes Objekt, bestimmen. Dazu wird für jeden Pixel der Objektkategorie c in dem Segmentierungsbild die Relevanzkarte R ermittelt. In der Relevanzkarte R ist für jeden Pixel des Eingangsbildes E ein Relevanzwert für die Segmentierung angegeben. Die Relevanzwerte geben also an, wie relevant die Pixel in dem Segmentierungsbild M im Vergleich zu dem Eingangsbild E für die Klassifizierung der Objektkategorie c ist. Die Bestimmung der Relevanzkarten R erfolgt nach gängigen Verfahren, wie zum Beispiel dem GradCam-Algorithmus oder dem Layer-Wise-Relevance-Propagation-Algorithmus.

In einem Schritt S4 wird auf Basis der Relevanzkarten R anschließend eine Kombinationsrelevanzkarte R' ermittelt. In der Kombinationsrelevanzkarte R' sind die Relevanzkarten R zusammengeführt, indem ein Mittelwert der Relevanzwerte der Pixel des ermittelten Satzes an Relevanzkarten R berechnet wird. Anders ausgedrückt, ist die Kombinationsrelevanzkarte R' das Mittel der Relevanzkarten R für alle Pixel des Eingangsbildes, die der gemeinsamen Objektkategorie c zugeordnet werden. Die Kombinationsrelevanzkarte R' repräsentiert daher das Mittel der Relevanzkarten R, die für die Pixel der Objektkategorie c ermittelt worden sind.

FIG 5 zeigt beispielhaft eine schematische Darstellung für eine solche Kombinationsrelevanzkarte R'. Wie in FIG 5 gezeigt, zeigt die Kombinationsrelevanzkarte R' dabei das Gleisbett G gemäß der Segmentierungsmaske M, wobei in dem Gleisbett G unterschiedliche Bereiche oder Bildausschnitte verschieden zueinander hervorgehoben sind. In FIG 5 ist das Hervorheben beispielhaft durch Schraffierung der einzelnen Bereiche dargestellt. Das Hervorheben kann aber beispielsweise auch durch Farbcodierung erfolgen. Zum Beispiel gibt es in der Kombinationsrelevanzkarte R' erste Relevanzbereiche W1 mit hoher Relevanz. Das heißt, es handelt sich um Bereiche beziehungsweise Pixel in den Bereichen, die für die Klassifizierung besonders relevant waren beziehungsweise die höchste Relevanz hatten. Des Weiteren sind zweite Relevanzbereiche W2 dargestellt, die im Vergleich zu den Relevanzbereichen W1 weniger relevant für die Objektklassifizierung waren. Dritte Relevanzbereiche W3 sind im Vergleich zu den zweiten Bereichen W2 und den ersten Bereichen W1 noch weniger relevant für die Objektklassifizierung gewesen.

Die Kombinationsrelevanzkarte R' kann zum Beispiel gemäß folgender Formel berechnet werden:

$$R'\,[a,b] = \text{Mittelwert}\,(R(x,y \mid p(x,y)$$

der Kategorie c)[a,b].

$p(x,y)$ ist ein beliebiges Pixel in dem Segmentierungsbild M darstellt, und [a,b] ist ein beliebiges Pixel des Eingangsbildes E.

In einem Schritt S5 wird als nächstes die Varianz der Relevanzwerte der Pixel des ermittelten Satzes an Relevanzkarten R ermittelt. Das heißt, es wird die Varianz über die Relevanzkarten R zu den Pixeln der Kategorie c untersucht. Dabei hat sich herausgestellt, dass Pixel, die als Teil der Segmentierung einer gemeinsamen Objektkategorie c identifiziert wurden, jeweils eine Saliency, also eine Relevanz in Bezug auf die anderen Pixel der gemeinsamen Kategorie c haben und diese nur in einem recht engen Bereich variiert. Das heißt, auf das konkrete Beispiel bezogen, dass in gut erkannten Bereichen des Gleisbetts G innerhalb der Schienen die Varianz gering ist. Werden hingegen Pixel in unmittelbarer Nachbarschaft der Pixel der Kategorie c betrachtet, so weisen diese eine starke Variation der Saliency gegenüber den Pixeln des Eingangsbildes E auf, die zu dem Objekt der Kategorie c gehören. Diese Variation ist umso ausgeprägter, je eindeutiger und schärfer die Trennung von dem eigentlichen Objekt der Kategorie c ist.

Im Anwendungsbeispiel des Gleisbetts G ist am Grenzbereich, also in den Randbereichen A und somit dem Übergang weg vom Gleis die Varianz hoch, wenn diese Merkmale bei der Segmentierung gut erkannt werden konnten. Kann dieser Bereich bei der Segmentierung hingegen nicht so gut aufgelöst werden, weil beispielsweise die Schienen weit weg von der Kamera entfernt sind, oder Störungen, wie beispielsweise Dunkelheit oder Nebel die Erkennung beeinträchtigen, sinkt die Varianz deutlich.

Die Betrachtung dieser Varianz kann nun als Konfidenzmaß verwendet werden. Anders ausgedrückt, werden zum Ermitteln der Varianz in einem vorgegebenen Randbereich A um alle Pixel der gemeinsamen Objektkategorie c herum, gemäß einem vorgegebenen Vergleichskriterium zumindest eine Konfidenzklasse K1, K2, K3 ermittelt. Die Konfidenzklasse K1, K2, K3 gibt dabei ein Maß dafür an, dass in dem Randbereich A ein Wechsel der mittels Segmentierung jeweils ermittelten Objektkategorie c stattgefunden hat. Die Varianz kann zum Beispiel gemäß folgender Formel ermittelt werden:

$$V[a,b] = Varianz\ (R(x,y \mid p(x,y)$$

der Kategorie c)[a,b].

In dem Schritt S5 wird abhängig von der Varianz nun auf Grundlage des Variationskoeffizienten ein Variationskoeffizient CV gebildet. Der Variationskoeffizient CV kann zum Beispiel gemäß folgender Formel berechnet werden:

$$CV[a,b] = V\ /\ (Abs\ (R'\ [a,b]) + \varepsilon),$$

wobei $\varepsilon$ = 1e-7.

$\varepsilon$ ist dabei als Regularisierungswert zu verstehen, da R'[a,b] für einzelne Pixel auch null sein kann.

Der Variationskoeffizient CV ist dabei ein Wert, mit dem die Varianz der Saliency Maps analysiert werden kann. Die Analyse der Varianz, insbesondere des Variationskoeffizienten, der Verteilung der Saliency der Bildpixel in Bezug auf die Pixel p(x, y) der Kategorie c erlauben es zu bestimmen, ob die Bedeutung eines Pixels des Eingangsbildes E für die Segmentierung wenig oder stark über die segmentierte Einheit variiert. Das heißt, es kann analysiert werden, ob ein Pixel also gleichbleibenden Einfluss auf das Ergebnis der Segmentierung hat, oder bei unterschiedlichen Eingangsdaten stark schwankenden Einfluss aufweist.

FIG 6 zeigt in thematischer Darstellung beispielhaft, wie der Variationskoeffizient CV sich auf das Segmentierungsbild M in Zusammenhang mit dem Eingangsbild E auswirken kann. In FIG 6 sind zur Darstellung des Variationskoeffizienten CV für die einzelnen Pixel und somit einzelne Bereiche abhängig von ihrem Wert des Variationskoeffizienten CV verschieden schraffiert, um die Varianz der unterschiedlichen Bereiche zu verdeutlichen. Im Bereich des Gleisbettes G weisen die Relevanzwerte der Pixel dabei einen geringen Variationskoeffizienten CV4 und somit eine geringe Varianz auf. Es kann allerdings verschiedene Varianzbereichmit unterschiedlicher Varianz geben. So gibt es in FIG. 6 beispielsweise Bereiche, die bei der Segmentierung zum Beispiel aufgrund von der Entfernung zur Kamera nicht besonders gut aufgelöst werden konnten. Diese Bereiche weisen einen etwas höheren Variationskoeffizienten CV3 auf. Hier ergibt sich im Vergleich der Pixel des Gleisbetts G im Randbereich A, also um das Gleisbett G, also Bereiche mit erhöhter Varianz. Des Weiteren sind in FIG 6 Varianzbereiche CV2 dargestellt, in denen der Variationskoeffizient CV für jeden Pixel einen noch höheren Wert aufweist, die aber dennoch bei der Segmentierung noch nicht optimal aufgelöst waren. Die höchste Varianz ist in einem Variationsbereich CV1 dargestellt. In diesem Bereich war im Randbereich A die Auflösung besonders gut, das heißt der Übergang zwischen Objektkategorie Gleisbett G und Umgebung konnte besonders gut aufgelöst werden. Der Variationskoeffizient CV weist hier zum Beispiel den höchsten Wert auf.

Auf Grundlage der Variationskoeffizienten CV und den bereits bekannten Saliency Maps, kann nun die Konfidenzmaske K bestimmt werden, die den vertrauenswürdigen Teil der Segmentierungsmaske M bestimmt und es damit ermöglicht innerhalb des Segmentierungsergebnisses die zuverlässig bestimmten Segmentierungen von fragwürdigen Teilen zu trennen. Dazu werden in einem Schritt S6 Konfidenzklassen für die Randbereiche A in Abhängigkeit von dem jeweiligen Variationskoeffizienten für die Pixel gebildet.

Das Segmentierungsbild M gemäß FIG 4 bildet dabei die Grundlage für die weitere Analyse. Wie in FIG 4 gezeigt, wird dazu zunächst der Randbereich A festgelegt oder bestimmt. Dazu wird für jeden Randpixel des Segmentierungsbildes M, an welchem gemäß der Segmentierung ein Wechsel der Objektkategorie c ermittelt wurde, ein Bandbereich B vorbestimmter Breite b festgelegt. Das heißt, um die äußeren Ränder der als Objektkategorie c kategorisierten Bildanteile wird ein Band der Breite b bestimmt. Dieser Bereich b plus die Pixel um den Rand der Segmentierung für die Objektkategorie c herum wird auch als Analysemaske bezeichnet.

Für die durch die Analysemaske bestimmten Bereiche wird das Verhalten der Variationskoeffizienten CV für die Pixel in einer lokalen Umgebung der Größe d um den Rand der Segmentierung untersucht. Dazu wird der Bandbereich B abschnittsweise jeweils in Umgebungsbereiche U der vorbestimmten Größe d unterteilt. Vorliegend sind die Umgebungsbereiche U zum Beispiel als Kreise dargestellt, die sich zumindest teilweise überlappen und deren jeweiliger Mittelpunkt ein Pixel in dem Bandbereich B ist. Die Breite b und Größe d ist anwendungsspezifisch und entsprechend der Segmentierungsaufgabe gewählt.

Anstelle des Segmentierungsbildes M kann als Ausgangspunkt der Analyse auch die Kombinationsrelevanzkarte R' gewählt werden. Hierbei ist aber durch einen Parameter zu bestimmen, ab welcher Relevanz die Pixel als Teil der Objektkategorie c gewertet werden sollen.

In dem Schritt S6 wird für jeden Umgebungsbereich U wird das Verhalten der Variationskoeffizienten CV analysiert. Dazu wird ein Mittelwert der jeweiligen Variationskoeffizienten CV ermittelt. Der Mittelwert der Variationskoeffizienten in dem Umgebungsbereich U wird im Folgenden auch als Variationskoeffizientmittel CV' bezeichnet. Das Variationskoeffizientmittel CV' kann zum Beispiel gemäß folgender Formel berechnet werden:

$$CV'[a,b] = \text{Mittelwert} (CV[a,b])$$

Anschließend wird das Variationskoeffizientmittel CV' in dem Randbereich A, insbesondere dem jeweiligen Umgebungsbereich U mit zumindest einem vorgegebenen Grenzwert T1, T2 verglichen. In Abhängigkeit von einem Erreichen des Grenzwerts T1, T2 wird die jeweilige Konfidenzklasse festgelegt. Die Grenzwerte T1, T2 können beispielsweise mittels eines Datensatzes von Beispielbildern ermittelt oder gewählt werden. Der Grenzwertevergleich kann zum Beispiel wie folgt gemäß einem Vergleichskriterium implementiert sein:

$$CV'[a,b] \geq T1: K1$$

$$T1 > CV'[a,b] \geq T2: K2$$

$$CV'[a,b] < T2: K3$$

Das bedeutet also, wenn der Mittelwert CV' größer gleich einem ersten Grenzwert T1 ist, wird diesem Umgebungsbereich U eine erste Konfidenzklasse K1 zugeordnet. Die Konfidenzklasse K1 entspricht dabei einer hohen Konfidenz. Liegt der Mittelwert hingegen zwischen dem ersten Grenzwert T1 und einem zweiten Grenzwert T2, wird dem zugeordneten Umgebungsbereich die Konfidenzklasse K2 zugeordnet. Für die Konfidenzklasse K2 ist die Konfidenz geringer als für die Konfidenzklasse K1. Für den Fall, dass der Mittelwert kleiner als der zweite Grenzwert T2 ist, wird dem zugeordneten Umgebungsbereich die Konfidenzklasse K3 zugeordnet. Die Konfidenzklasse K3 weist die geringste Konfidenz auf.

Auf diese Weise wird die Umgebung der Objektkategorie 10 in verschiedene Konfidenzbereiche K1, K2, K3 aufgeteilt, indem zusammenhängende Umgebungsbereiche U gleicher Konfidenzklasse zusammengeführt werden.

FIG 7 zeigt beispielhaft eine Abbildung des Segmentierungsbildes M, für die im Randbereich A zusammenhängende Konfidenzbereiche K1, K2, K3 gleicher Konfidenzklasse ermittelt wurden. Ein erster Bereich K1 entspricht dabei einem Bereich, in dem die höchste Konfidenz gemäß der zuvor beschriebenen Analyse ermittelt wurde. Für zweite Bereiche K2 und dritte Bereiche K3 sinkt hingegen die Konfidenz. Das heißt, der Übergang vom Gleisbett zur Umgebung konnte dort weniger zuverlässig bestimmt werden.

In dem Schritt S7 wird in Abhängigkeit von den Konfidenzbereichen K1, K2, K3 nun die Konfidenzmaske K bestimmt. Dafür werden die Bereiche innerhalb der Segmentierung gebildet, deren umliegende Bereiche einer gleichen Konfidenzklasse zugeordnet sind. Das heißt, die Abschnitte des Segmentierungsbildes M, für die in dem Randbereich A dieselbe Konfidenzklasse ermittelt wurde, werden zusammengeführt und den jeweils für die Randbereiche A ermittelten Konfidenzklassen zugeordnet.

FIG 8 zeigt in schematischer Darstellung eine Abbildung des Segmentierungsbildes M mit der überlagerten Konfidenzmaske K. Dabei ist die Konfidenzmaske K analog zu den Randbereichen A in FIG 7 in die Konfidenzbereiche K1, K2, K3 mit der unterschiedlichen Konfidenzklasse zugeordnet.

Dabei ist die Segmentierungsmaske K auf das Ergebnis der Segmentierung angewendet, sodass nachfolgende Applikationen basierend auf dieser Information des Segmentierungsergebnisses der Anwendung entsprechend verwendet werden können. Beispielsweise können Bereiche mit niedriger Konfidenz nicht für weitere Steuerungsentscheidungen oder Steuerungsaufgaben berücksichtigt werden. In Bereichen niedriger Konfidenz kann so zum Beispiel bei einer Hinderniserkennung mittels Segmentierung der autonom fahrende Zug eher abgebremst werden oder zum Beispiel ein Warnton vorsorglich ausgestoßen werden. Sind die Bereiche hingegen bei der Hinderniserkennung mit hoher Konfidenz gemäß Konfidenzmaske K angegeben, kann der Zug ungehindert weiterfahren, also seine Fahrt fortsetzen. Das heißt die Konfidenzmaske K, beziehungsweise die jeweilige Konfidenzklasse zur Konfidenzmaske, kann Einfluss auf die jeweilige Steuerungsaufgabe nehmen. Somit kann das Steuergerät 12, insbesondere das Datenverarbeitungssystem 13, in Abhängigkeit von der jeweiligen Konfidenzklasse der Konfidenzmaske K und in Abhängigkeit von dem Segmentierungsbild M, das Steuersignal S zum Durchführen der Steuerungsaufgabe erzeugen.

Anders als in den Ausführungsbeispielen der Figuren gezeigt, kann das beschriebene Verfahren zum Beispiel auch für autonom fahrende Kraftfahrzeuge oder andere Fahrzeuge eingesetzt werden. Weiterhin ist es auch denkbar, das Verfahren zum Beispiel zur Optimierung eines Autofokus-Algorithmus für eine Digitalkamera zu verwenden.

Insgesamt zeigen die Ausführungsbeispiele eine Möglichkeit zur Bestimmung von Konfidenzmasken für die betriebssichere Verwendung von KI-basierter Segmentierung von Kamerabildern für autonom fahrende Züge.

*Unabhängig vom grammatikalischen Geschlecht eines bestimmten Begriffes sind Personen mit männlicher, weiblicher oder anderer Geschlechteridentität mit umfasst.*

**Patentansprüche**

1. Computerimplementiertes Verfahren zum Bewerten einer Zuverlässigkeit eines Segmentierungsbildes (M), welches als Ergebnis einer Segmentierung eines Eingangsbildes (E) zumindest eine Objektkategorie (c) bereitstellt, wobei

- für alle Pixel in dem Segmentierungsbild (M), welche gemäß der Segmentierung einer gemeinsamen Objektkategorie (c) zugeordnet sind, jeweils eine Relevanzkarte (R) ermittelt wird, in welcher für jeden Pixel des Eingangsbilds (E), ein Relevanzwert für die Segmentierung angeben ist,

- für alle Pixel eine Varianz der Relevanzwerte über den Satz der Relevanzkarten (R) bestimmt wird,

- zum Bewerten der Zuverlässigkeit der Segmentierung in Abhängigkeit von der Varianz der Relevanzwerte der Pixel des ermittelten Satzes an Relevanzkarten (R) eine Konfidenzmaske (K) ermittelt wird, indem für einen vorgegebenen Randbereich (A) um alle Pixel der gemeinsamen Objektkategorie (c) herum gemäß einem vorgegebenen Vergleichskriterium zumindest eine Konfidenzklasse ermittelt wird, welche ein Maß dafür angibt, wie zuverlässig in dem Randbereich (A) ein Wechsel der mittels Segmentierung jeweils ermittelten Objektkategorie (c) erkannt wurde.

2. Computerimplementiertes Verfahren nach Anspruch 1, wobei die Konfidenzmaske (K) auch in Abhängigkeit von einem Mittelwert der Relevanzwerte der Pixel des ermittelten Satzes an Relevanzkarten (R) ermittelt wird.

3. Computerimplementiertes Verfahren nach Anspruch 2, wobei die Konfidenzmaske (K) ermittelt wird, indem jeweils ein Variationskoeffizient (CV) durch Vergleichen der Varianz und des Mittelwerts der Relevanzwerte für jeden Pixel in dem Eingangsbild (E) bestimmt wird.

4. Computerimplementiertes Verfahren nach einem der vorhergehenden Ansprüche, wobei gemäß dem vorgegebenen Vergleichskriterium ein Mittelwert der jeweiligen Variationskoeffizienten (CV) in dem Randbereich mit zumindest einem vorgegebenen Grenzwert (T1, T2) verglichen wird, wobei in Abhängigkeit von einem Erreichen des Grenzwerts (T1, T2) die jeweilige Konfidenzklasse festgelegt wird.

5. Computerimplementiertes Verfahren nach einem der vorhergehenden Ansprüche, wobei der Randbereich (A) basierend auf der Segmentierung ermittelt wird, indem für jeden Randpixel des Segmentierungsbildes (M), an welchem gemäß der Segmentierung ein Wechsel der Objektkategorie (c) ermittelt wurde, ein Bandbereich (B) vorbestimmter Breite festgelegt wird, und für den festgelegten Bandbereich (B) abschnittsweise jeweils ein Umgebungsbereich (U) vorbestimmter Größe festgelegt wird, wobei der Satz an Umgebungsbereichen (U) den Randbereich (A) zum Ermitteln der zumindest einen Konfidenzklasse bilden.

6. Computerimplementiertes Verfahren nach einem der vorhergehenden Ansprüche, wobei zum Ermitteln der Konfidenzmaske (K) diejenigen Abschnitte des Segmentierungsbildes (M) für die in dem Randbereich (A) dieselbe Konfidenzklasse ermittelt wurde, zusammengeführt werden, und der jeweils für die zugehörigen Randbereiche (A) ermittelten Konfidenzklasse zugeordnet werden.

7. Computerimplementiertes Verfahren nach einem der vorhergehenden Ansprüche, wobei das Eingangsbild (E) mittels einer Kamera erzeugt wird.

8. Computerimplementiertes Verfahren nach einem der vorhergehenden Ansprüche, wobei das Segmentierungsbild (M) basierend auf dem Eingangsbild (E) mittels eines Segmentierungsalgorithmus erzeugt wird.

9. Computerimplementiertes Verfahren nach Anspruch 8, wobei der Segmentierungsalgorithmus ein trainiertes Maschinenlernmodell ist.

10. Computerprogramm mit Befehlen, welche bei Ausführung durch ein Datenverarbeitungssystem (13), das Datenverarbeitungssystem (13) dazu veranlassen, ein computerimplementiertes Verfahren nach einem der vorhergehenden Ansprüche auszuführen.

11. Computerlesbares Speichermedium, das ein Computerprogramm nach Anspruch 10 speichert.

12. Datenverarbeitungssystem (13), welches dazu eingerichtet ist, ein computerimplementiertes Verfahren nach einem der Ansprüche 1 bis 9 durchzuführen.

13. Verfahren zum Betreiben eines Steuergeräts (12), wobei für das Steuergerät (12) ein Datenverarbeitungssystem (13) nach Anspruch 12 bereitstellt wird, wobei in Abhängigkeit von der zumindest einen Konfidenzklasse der Konfidenzmaske (K) und in Abhängigkeit von dem Segmentierungsbild (M) durch das Steuergerät (12) ein Steuersignal (s) zum Durchführen einer Steuerungsaufgabe erzeugt wird.

14. Verfahren nach Anspruch 13, wobei das Steuergerät (12) in einem autonomen Fahrzeug bereitgestellt wird, und die Steuerungsaufgabe das Führen des autonomen Fahrzeugs betrifft.

15. Autonomes Fahrzeug mit einem Steuergerät (12), welches dazu eingerichtet ist, ein Verfahren nach

**EP 4 787 303 A1**

Anspruch 14, auszuführen.

FIG 1

FIG 2

# FIG 3

# FIG 4

# FIG 5

# FIG 6

# FIG 7

# FIG 8

**EUROPÄISCHER RECHERCHENBERICHT**

Nummer der Anmeldung

EP 26 15 4879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BAEK SEUNG-CHAN: "Uncertainty Quantification of Grad-CAM via Monte Carlo Dropout", MASTER THESIS, 1. Februar 2024 (2024-02-01), Seiten 1-58, XP093367835, * Zusammenfassung; Abbildungen 4.6, 4.7, 4.23,4.26,4.27 * * Abschnitte 2.3.2, 2.4, 4.2, 4.3 *; Absätze [0003], [0018], [0019], [0043], [0044] | 1-15 | INV. G06T7/11 G06N3/047 G06V20/56 |
| A | US 2021/026355 A1 (CHEN KE [US] ET AL) 28. Januar 2021 (2021-01-28) * Absätze [0005], [0006], [0024], [0025], [0026], [0029], [0044], [0059] - [0063], [82ff], [0104]; Ansprüche 1,2,9; Abbildungen 4-6 * | 1-15 | |
| A | KIRILL BYKOV ET AL: "How Much Can I Trust You? -- Quantifying Uncertainties in Explaining Neural Networks", ARXIV.ORG CORNELL UNIVERSITY LIBRARY, 201 OLIN LIBRARY CORNELL UNIVERSITY ITHACA, NY 14853, 16. Juni 2020 (2020-06-16), XP081697050, * Zusammenfassung; Abbildungen 2,3,7 * * section 2.3 * | 1-15 | |

**RECHERCHIERTE SACHGEBIETE (IPC)**

G06T
G06V

Der vorliegende Recherchenbericht wurde für alle Patentansprüche erstellt

| Recherchenort | Abschlußdatum der Recherche | Prüfer |
|---|---|---|
| München | 21. Mai 2026 | Ruf, Andreas |

**EP 4 787 303 A1**

## ANHANG ZUM EUROPÄISCHEN RECHERCHENBERICHT
## ÜBER DIE EUROPÄISCHE PATENTANMELDUNG NR.

**EP 26 15 4879**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**21-05-2026**

| Im Recherchenbericht angeführtes Patentdokument | Datum der Veröffentlichung | Mitglied(er) der Patentfamilie | Datum der Veröffentlichung |
|---|---|---|---|
| US 2021026355 A1 | 28-01-2021 | US 2021026355 A1<br>US 2025014186 A1<br>US 20260004430 A1<br>WO 2021016596 A1 | 28-01-2021<br>09-01-2025<br>01-01-2026<br>28-01-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **OMEIZA, DANIEL** ; **SPEAKMAN, SKYLER** ; **CINTAS, CELIA** ; **WELDEMARIAM, KOMMINIST.** *Smooth Grad-CAM++: An Enhanced Inference Level Visualization Technique for Deep Convolutional Neural Network Models.*, 2019

- **MONTAVON, GRÉGOIRE** ; **BINDER, ALEXANDER** ; **LAPUSCHKIN, SEBASTIAN** ; **SAMEK, WOJCIECH** ; **MÜLLER, KLAUS-ROBERT.** *Layer-Wise Relevance Propagation: An Overview.*, 2019

- **O. RONNEBERGER et al.** U-Net: Convolutional Networks for Biomedical Image Segmentation. *arXiv:1505.04597*